# EUROPEAN PATENT SPECIFICATION

(11) **EP 0 518 654 B1**
(45) Date of publication and mention of the grant of the patent: **16.08.2000**
(21) Application number: 92305339.1
(22) Date of filing: 11.06.1992
(51) Int. Cl.: C08L 79/08, C08L 81/06, C08L 83/04

(54) **Inorganic species modified cyanate resin bodies**
Mit anorganischen Spezies modifizierte Cyanatharzgegenstände
Articles à partir de résine cyanate modifiés avec des espèces inorganiques

(30) Priority: 11.06.1991 US 714125
(43) Date of publication of application: 16.12.1992
(73) Proprietor: HEXCEL CORPORATION, Pleasanton, CA 94588-8781 (US)
(72) Inventor: Arnold, Cynthia Ann, Chandler AZ 85226 (US); MacKenzie, Paul Dominic, Chandler AZ 85224 (US)
(74) Representative: Allen, Philippa Margaret

(56) References cited:
- EP-A- 0 326 931
- EP-A- 0 412 827
- EP-A- 0 486 197
- WO-A-92/04395
- DE-A- 3 423 385
- DE-A- 3 613 006

## Description

The present invention is directed to the combination of inorganic species modified resins derived from cyanate functional monomers and/or oligomers in a resin body system.

Material or structural changes in a hostile environment have been a problem that has received much attention from skilled practitioners. In a continuing effort to modify materials to achieve enhanced properties, it has been found in the present invention that modifying certain cyanate functional monomers and/or oligomers with certain inorganic monomeric, oligomeric and/or polymeric species provides a material that, when reacted, is more stable in an oxidising environment and has increased toughness with other properties remaining unchanged. Materials exhibiting such stability are found useful as structural materials especially for space, aerospace, marine, automotive, electronic and any application wherein a light weight, sturdy material is found advantageous. Additionally, the present invention may be combined with other materials as a coating, as an adhesive, or as a film. The material may be formed into prepreg and later cured into laminar structures.

Heretofore, modification of cyanate resin systems to increase environmental stability has been in the context of organic modifiers, such as epoxy, bismaleimides, polyarylene copolymers. Examples of these kind of modifications are contained in US patent application Serial No 07/612,779, filed 13 November, 1990 (equivalent to European Patent Application No 91310167 - EP-A-486197). Therein, the modifications were made to increase the toughness of the resin system.

The modifiers of the present invention comprise wholly and/or partially inorganic monomeric, oligomeric and/or polymeric species which are then combined with a cyanate resin system improving the resin body properties in the reacted body.

A cyanate resin body, which may be of a thermoset or thermoplastic nature or be between those extremes, is derived from cyanate functional monomers and/or oligomers. Some cyanate monomers can be advanced to a pre-polymer stage wherein upto about 50 percent of the cyanate functional groups react. Effectively, the product of such a reaction contains the triazine moiety and may or may not contain unreacted cyanate functional groups. Further metes and bounds of the cyanate functional groups may be found in the above cited patent application. Furthermore, the cyanate resin system may be comprised of any resin component consistent with the above stated derived product and known to those skilled in this art. In particular, the cyanate functional monomers and/or oligomers consists essentially of cyanate esters of one or more compounds of the general formula NCOAr(YₓArₘ)_{q}OCN, wherein m = 0 to 5, q = 0 to 5 and x = 0 up to 2 and wherein Ar is a single or fused aromatic or substituted aromatic and combinations thereof linked in the ortho, meta, and/or para position and Y is a linking unit selected from the group consisting of oxygen, carbonyl, P(R₃R₄R'₄R₅), Si(R₃R₄R'₄R₆), sulphur, sulphur oxides, chemical bond, aromatic linked in ortho, meta, and/or para positions and/or CR₁R₂, wherein R₁ and R₂ are hydrogen, halogenated alkanes, and/or substituted aromatics and/or hydrocarbon units wherein said hydrocarbon units are singularly or multiply linked and consist of up to 20 carbon atoms for each R₁ and/or R₂, R₃ and R₆ are alkyl, aryl, alkoxy or hydroxy, R'₄ and R₄ which may be the same, are singly linked oxygen or a chemical bond and R₅ is doubly linked oxygen or chemical bond.

Thus, according to the invention, a curable resin composition containing reactive species to effect curing comprises an inorganic species and a cyanate resin system wherein the inorganic species is selected from siloxanes and phosphagenes and has reactive functionality through which it is capable of being bonded to the cyanate resin system and wherein the cyanate resin system comprises cyanate functional monomers and/or oligomers.

The inorganic species has reactive functionality, such as amine, hydroxyl, epoxy, cyanate, especially amine, whereby it can react with the reactive species present in the resin body. Preferably, the inorganic species is comprised of elements from group three, group four, group five, and the first transition series of elements from the Periodic Table and/or some combination thereof and therebetween. Most preferably the inorganic species of choice comprise silicon, zirconium, aluminium, titanium, phosphorus and/or some combinations thereof and therebetween, especially siloxanes and phosphazenes. In the preferred siloxane and phosphazene species, the species contain organic pendent groups, typically alkyl, eg methyl, ethyl, propyl, aryl, eg phenyl, haloalkyl, eg per fluoroalkyl, and alkoxy, eg methoxy or ethoxy. Thus, the preferred siloxanes and phosphazines can be represented by the formulae:- 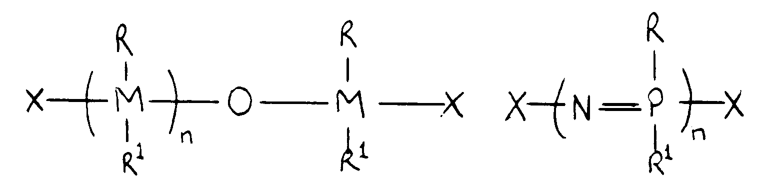 where M = Si or other selected atom, R and R¹ = organic pendant groups which may be the same or different and X = reactive functionality.

The inorganic species may be present in the resin body from 0.1 to 80 weight percent, preferably 1 to 50, most preferably, 1 to 30 weight percent.

The resin body consists of essentially cyanate functional monomers and/or oligomers, optionally with thermosets and/or thermoplastics. The thermosets and/or thermoplastics may be selected from the group consisting of epoxies, phenolics, arylenes, arylates, imides, esters, maleimides, methacrylates, acrylates, amides, ureas, urethanes, cyanurates, isocyanurates, ketones, sulphones, carbonates, ethers, formals, and/or some combination thereof and/or therebetween.

Preferably, in addition to the cyanate functional monomers and/or oligomers, the resin body comprises epoxies, phenolics, arylates, cyanate maleimides, isocyanurates, and/or some combination thereof. Most preferably, the cyanate functional monomers and/or oligomers from within the general formula NCOAr(YₓArₘ)_{q}OCN are selected from the following:- 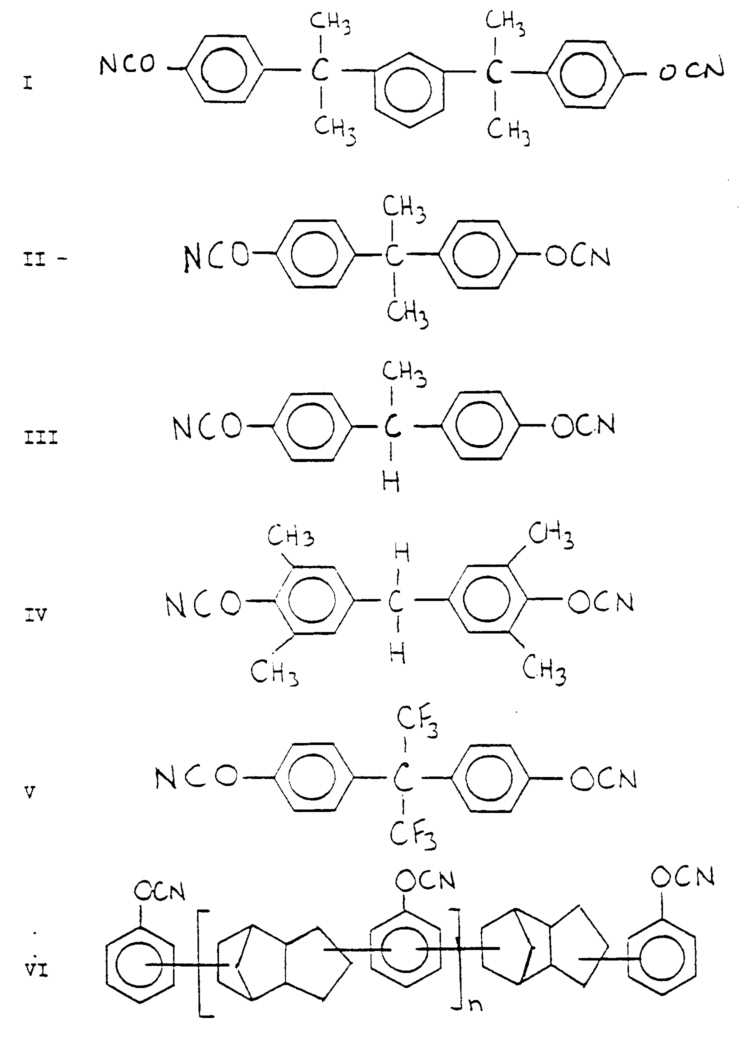 where n is up to 3 and can be fractional; and a rubber modified version of VI; compounds I to V being available as RTX 366, AROCY B-10, AROCY L-10, AROCY M-10, AROCY F-10, respectively, which are obtainable from Rhone-Poulenc and compound VI being available as XU71787.02L and, in its rubber modified form, as XU71787.07L which are obtainable from Dow Chemical.

Advantageously, composite additives may be included in the cyanate resin system providing other properties. Fibres, such as olefins, polytetrafluoroethylene, carbon, glass, quartz, ceramic, and/or aramide fibres and/or some combination thereof and therebetween, may be added to the resin system to strengthen and/or increase the modulus of the resin body. The fibres can be either chopped, continuous, whiskers, and/or some combination thereof and therebetween. Toughening agents such as but not limited to glass beads, elastomers, core-shell particles, polymers, and/or oligomers and/or some combination thereof and therebetween may be added to the resin body. Minerals such as but not limited to vermiculite and/or mica, halogenated components such as but not limited to chloro, bromo, fluoro alkyl and/or phenyl groups, and/or combinations thereof and therebetween may be added to the resin body as a flame retardant.

In its most general form, the resin body is made in the following manner. Simply, the inorganic species is combined with the cyanate resin system by blending the components. After blending, the reactive species present in the resin body may be reacted or cured. The reaction or curing of reactive species present in the resin body is well understood in the art. Typically, for the cyanate functional monomers and/or oligomers, catalysts are selected from active hydrogen sources and from transition metal complexes of metals selected from the first, second and third transition series of the periodic chart. If other reactive species are present, such as epoxy or phenolic precursors, catalysts and hardeners suitable for such species have to be used. Other reaction additives as are known in the art may also be used.

Importantly, the outer surface area of the reacted resin body is enriched with the inorganic species, preferably comprises an enriched area which extends to a depth of about 100 Angstroms from the outer surface area. As those skilled in the art will appreciate, part of the problem in modifying resin systems is that an improvement in one property may result in the loss of some other desirable property. In the present invention, it is notable that the cyanate resin body has enhanced oxidation resistance and enhanced toughness with the remaining properties, such as strength, modulus, short beam shear strength, and glass transition temperature remaining relatively unchanged by the modification. It has been observed that the inventive compositions absorb water at a slower sorption rate and exhibit greater hydrophobicity. Additionally, it is known by those skilled in this art that the dielectric loss and dielectric constant characteristically follow the same trend as water sorption. In this instance, the dielectric loss should decrease and the dielectric constant should decrease.

The following examples are intended to further illustrate the invention and are not intended to limit the scope of the invention.

### Example 1

In Example 1, 5 grammes of bisaminopropyl terminated poly(dimethyl diphenyl)siloxane was dissolved in 10 millilitres of methylene chloride. The siloxane molar composition was 70 percent dimethyl and 30 percent diphenyl. The siloxane molecular weight was about 4,500 grammes per mole. This solution was added to 45 grammes of RTX 366 (obtained from Rhone-Poulenc) and heated to 100 degrees centigrade to effect solution. The temperature was maintained at 100 degrees centigrade to evaporate the methylene chloride leaving the resin blend. 2.6 weight percent catalyst, copper acetyl acetonate catalyst (about 1% in paranonylphenol) was added based on the cyanate functional monomers and/or oligomers. The resin blend was poured into a steel mould, placed in a vacuum oven and degassed at about 100 degrees centigrade for approximately 1 hour. After degassing the temperature was increased to 121 degrees centigrade and held for 2 hours. The temperature was then increased to 177 degrees centigrade and held at that temperature for 2 hours. The resin body was then allowed to cool to room temperature. The resin body was separated from the mould and analysed.

T-300 carbon fabric (obtained from Toray) was impregnated with the resin body. The resin body was dissolved in methylene chloride and subsequently used to saturate the fabric to obtain a total resin content of 35 weight percent. The fabric was laid up, pressed, and cured.

The resistance to microcracking, an indication of toughness, was determined for the resin body impregnated fabric. Samples which were 12 plies in thickness and dimensionally 0.254 centimetres wide by 0.76 centimetres long were thermally cycled from -180 degrees centigrade to 125 degrees centigrade at 3 degrees centigrade per minute. The temperature were held at the extremes for 15 minutes. The samples were cycled 25 times.

Oxygen plasma stability was determined for 2.54 centimetres square thin films and resin body castings. The samples were degassed for 1 hour at room temperature and weighted for constant weight. The samples were placed in an evacuated test chamber, purged with air and a radio frequency applied to create an oxygen plasma in the vicinity of the samples. The samples were subjected to the oxygen plasma for 1 hour removed and immediately weighed. The etch rate was determined as a function of weight loss per exposed surface area.

Flammability was determined according to Boeing specification 7230 entitle "Determination of Flammability Properties if Aircraft Materials". Water sorption was determined on 0.95 centimetres by 0.95 centimetres by 0.32 centimetres thick resin body castings. The samples were dried to constant weight, immersed into room temperature distilled water and weighted from time to time over 500 hours. At the end of 500 hours the samples were boiled in water and reweighed. Surface profiles were determined by X-rag photoelectron spectroscopy. Samples were cleaned of any surface contamination prior to analysis.

### Example 2

Example 2 was the same as Example 1 except that 2.5 grammes of bisaminopropyl terminated poly (dimethyl diphenyl) siloxane was added to 47.5 grammes of XU71787.02L. The molar composition of the siloxane was 50 percent dimethyl and 50 percent diphenyl. The siloxane molecular weight was about 10,000 grammes per mole. The same procedure was followed as in Example 1 except the sample was only partially degassed and that a 2 hour post-cure at 232 degrees centigrade was added after the cure cycle. The same analysis was also followed.

### Example 3

Example 3 was the same as Example 2 except that the cyanate was changed to 23.75 grammes of XU71787.02L and blended with 23.75 grammes of XU71787.07L. The same procedure was followed as in Example 2. The same analysis was also followed.

### Example 4

Example 4 was the same as Example 2 except that 2.5 grammes of bisaminopropyl terminated poly (dimethyl diphenyl) siloxane was added to 47.5 grammes of XU71787.02L. The molar composition of the siloxane was 70 percent dimethyl and 30 percent diphenyl. The siloxane molecular weight was about 10,000 grams per mole. The same cure procedure was followed as in Example 1. This Example exhibited arcroscopic phase separation.

### Example 5

In Example 5, 17.5 grams XU71787.02L, 15 grams of AROCY L-10, and 5 grams of epoxy were heated at about 100 degrees centigrade to effect solution. 12.5 grams amine terminated thermoplastic, ie a 40:60 PES/PEES copolymer of the type described in the aforementioned patent application, which was dissolved in 80 millilitres of methylene chloride was added to the aforesaid cyanate-epoxy resin mixture. 6 grams of bisaminopropyl poly(dimethyl diphenyl) siloxane dissolved in 10 millilitres of methylene chloride was then added to obtain an admixture. The methylene chloride was partially evaporated from the solution, leaving the uncured resin body and about 5 weight percent. The catalyst, as described in Example 1, was added and stirred for 5 minutes. The resin was poured into a steel mould and degassed in a vacuum oven for 0.5 to 2 hours at 100 degrees centigrade, and then the uncured resin body. The resin was cured according to the cure cycle described in Example 2 except that the cure step at 177 degrees centigrade was extended to four hours. The same analysis as employed in Example 2 was used.

### Example 6

In Example 6, 5 grams of a poly(imide siloxane) random copolymer was dissolved in 20 millilitres of methylene chloride and added to 45 grams of XU71787.021. The copolymer was based upon 10 weight percent of bisaminopropyl terminated polydimethylsiloxane, 5,5′-oxybis-1,3-isobenzofurandione, 3, 3′, 5,5′tetramethyl 4,4′ -[1,4-phenylene-bis-(1-methyl ethylidene)] bisaniline, and phthalic anhydride. The polydimethylsioxane was about 5,000 grams per mole molecular weight. The cure procedure and analysis followed in Example 2. This Example was marginally homogeneous.

### Examples 7 through 43

Examples 7 through 43 were processed similarly to the above Examples, specifically Example 1 except that when XU71787.02L and/or XU71787.07L were the cyanate of choice the post-cure of Example 5. Table 1 exhibits the compositions of Examples 7 through 43.

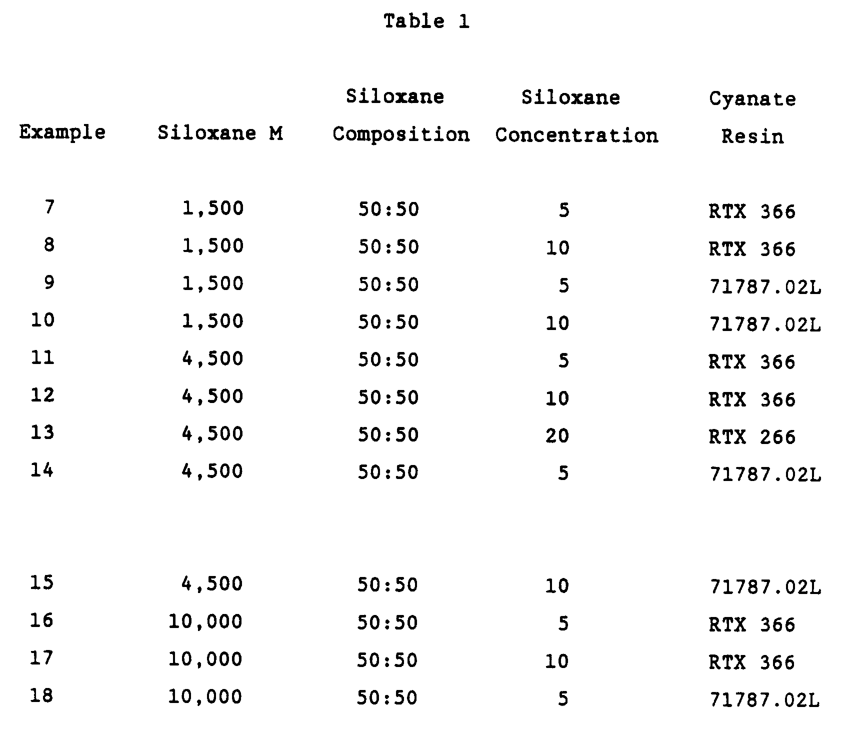

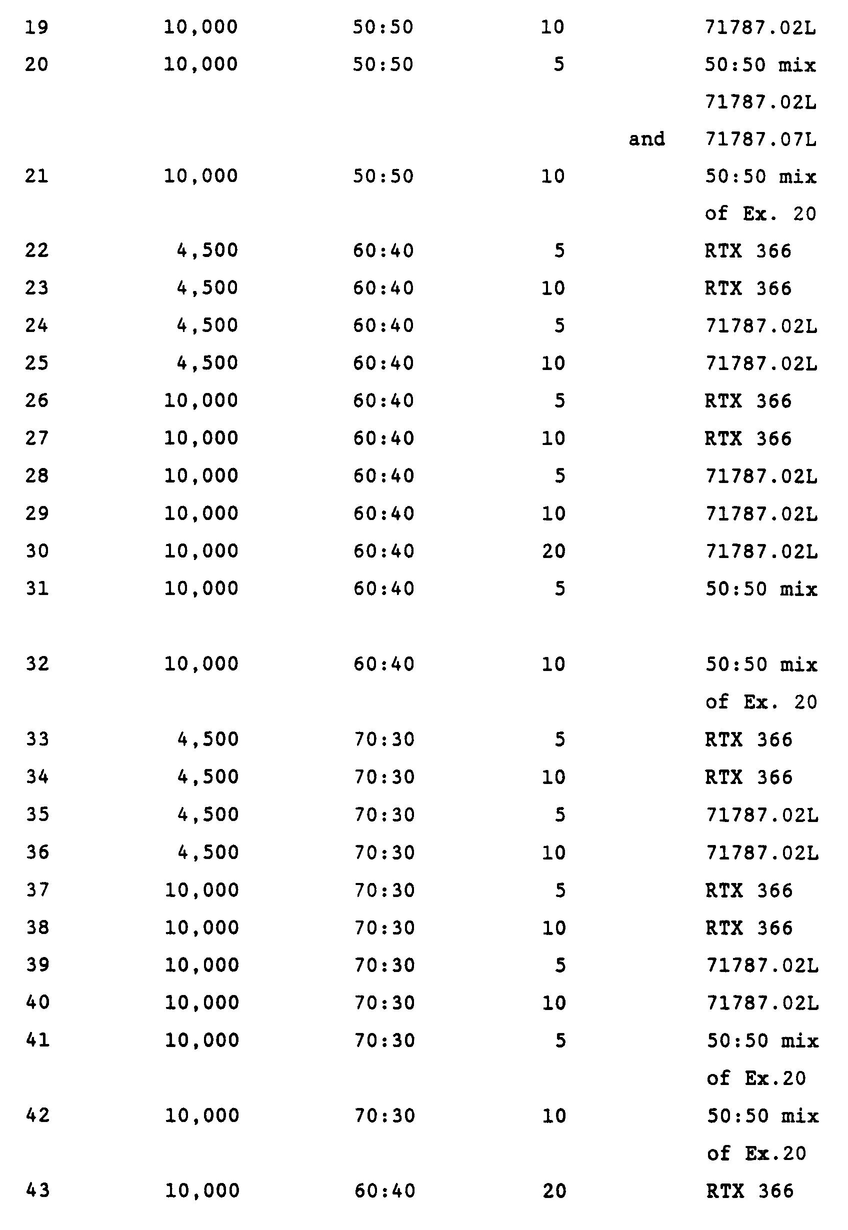

In Table 1, the Siloxane Mn is the approximate number average molecular weight of the siloxane component. The Siloxane Composition is the molar ratio of the dimethyl to diphenyl substitution on the silicon atom of the repeat unit. The Siloxane Concentration is the weight percent siloxane present in the resin body. The Cyanate Resin is the type of cyanate resin used in the resin body. It is contemplated herein that the methyl and/or phenyl substituted groups may be in singular and/or a plurality of substitutions with the inorganic species. The range of methyl is about 50 to 70 mole percent and the range of phenyl is about 30 to 50 mole percent.

Table 2 exhibits the results of the x-ray photoelectron spectroscopic analysis of several of the Examples. These results indicate that the surface of the resin body is enriched in silicon on and/or within the surface of the sample. This conclusion is supported by the enhanced silicon signal detected for the silicon atomic concentration within the surface of the sample as determined by the 15 to 90 degree angle sweep analysis. The greater the angle of detection the greater the average depth of detection. It is noted that Example 19 has a bulk concentration of silicon of 0.9 atomic percent ("bulk"). The 15 degree angle indicates that the silicon concentration is 5.7 atomic percent; the 90 degree angle indicates that the silicon concentration is 4.4 atomic percent. For samples of this kind, the depth of detection averages about up to 100 Angstroms for the 90 degree detection angle.

**Table 2**

| Example | Angle | Si Atomic percent |
|---|---|---|
| 19 | 15 | 5.7 |
| 19 | 90 | 4.4 |
| 19 | bulk | 0.9 |
| 29 | 15 | 9.8 |
| 29 | 90 | 7.1 |
| 29 | bulk | 1.0 |
| 40 | 15 | 12.0 |
| 40 | 90 | 7.2 |
| 40 | bulk | 1.3 |

Microcracking is an indication of toughness. The measurement of microcracking is in cracks per inch determined over a two inch sample length. Table 3 exhibits microcracking data indicating that the resin bodies containing siloxane show increased resistance to microcracking.

**Table 3**

| Example | Cracks/inch |
|---|---|
| 71787.02L control | 9.0 |
| 18 | 3.5 |
| 19 | 2.5 |
| RTX 366 control | 1.0 |
| 16 | 0 |
| 17 | 0.5 |

Toughness is also determined by strain energy release rates or G_{1c} values. Table 4 shows toughness values for many of the above Examples. G_{1c} values are given in joules/square meter. G_{1c} values for the 71787.02L control was 160 and for the RTX 366 control was 716. The value for the mix of the two 50:50 cyanate resins mixed as in Example 20 was 530.

**Table 4**

| Example | G_{1c} value | Example | G_{1c} value |
|---|---|---|---|
| 7 | 866 | 23 | 947 |
| 8 | 990 | 24 | 321 |
| 9 | 282 | 25 | 338 |
| 11 | 913 | 33 | 718 |
| 12 | 738 | 34 | 1196 |
| 14 | 319 | 36 | 461 |
| 15 | 375 | 43 | 3713 |
| 18 | 173 | 28 | 335 |
| 19 | 187 | 29 | 330 |
| 20 | 606 | 16 | 912 |
| 21 | 686 | 17 | 1022 |
| 22 | 924 | 31 | 603 |
| 26 | 834 | 32 | 587 |
| 27 | 1046 | | |

The equilibrium water sorption data indicates that siloxane incorporation results in more hydrophobic resin bodies. For example, the RTX 366 sorbs 0.64 weight percent water whereas in Example 17 0.61 weight percent water is sorbed. The 71787.02L sorbs 0.99 weight percent water whereas in Example 19 0.81 weight percent water is sorbed. The .03 weight percent difference in Example 17 is significant as is the value differential for Example 19.

The stability of the resin bodies in an oxidising environment is given in Table 5. The units are given in measurement of weight loss per exposed surface area in micrograms per square centimetres. The lower etch rate indicates greater stability in an oxidising environment.

**Table 5**

| Example | etch rate, film | etch rate, resin |
|---|---|---|
| 71787.02L | | 284 |
| 50:50 cyanate mix (Example 20) | 630.5 | |
| 18 | 298.5 | 101 |
| 19 | 246 | 82.5 |
| RTX 366 | | 215 |
| 16 | 398.5 | |
| 17 | | 92 |

Flammability was improved by siloxane incorporation. The burn length of 71787.02L was 3.30 centimetres, whereas in Example 19 the burn length was 3.05 centimetres. The burn length of RTX 366 was 2.29 centimetres, whereas in Example 17 the burn length was 2.03 centimetres. The burn length of the 50:50 cyanate resin prepared as in Example 20 was 3.30 centimetres, whereas in Example 21 the burn length was 2.79 centimetres.

The thermal and mechanical properties of the resin bodies compared very favourably to samples not combined with the siloxane component. As such, it is concluded that the addition of siloxane to the cyanate resin system herein disclosed has few significant disadvantageous effects on mechanical and/or thermal properties of the resultant resin bodies.

## Claims

1. A curable resin composition containing reactive species to effect curing and which composition comprises an inorganic species and a cyanate resin system wherein the inorganic species is selected from the group consisting of siloxanes and phosphazenes and has reactive functionality through which it is capable of being bonded to the cyanate resin system and wherein the cyanate resin system comprises cyanate functional monomers and/or oligomers.

2. A resin composition as claimed in Claim 1 wherein the inorganic species is comprised of elements from Group III, Group IV, Group V and the first Transition Series of elements from the Periodic Table.

3. A resin composition as claimed in either Claim 1 or Claim 2 wherein the inorganic species is comprised of at least one of silicon, zirconium, aluminium, titanium and phosphorus.

4. A resin composition as claimed in Claim 1 wherein the siloxanes and phosphazenes comprise pendant organic groups.

5. A resin composition according to any one of the preceding Claims wherein the cyanate resin system consists essentially of cyanate esters of one or more compounds of the general formula
N C O Ar (Yₓ Arₘ)_{q} O C N
wherein m = 0 to 5, q = 0 to 5, and x = 0 up to 2, Ar is a single or fused aromatic or substituted aromatic and combinations thereof linked in ortho, meta and/or para positions and Y is a linking unit selected from the group consisting of CR₁R₂, P(R₃R₄R'₄R₅), Si(R₃R₄R'₄R₆), oxygen, carbonyl, sulphur, sulphur oxides, chemical bond, aromatic linked in ortho, meta and/or para positions, wherein R₁ and R₂ are hydrogen, halogenated alkanes, and/or substituted aromatics and/or hydrocarbon units wherein said hydrocarbon units are singly or multiply linked and consisting of up to 20 carbon atoms for each R₁ and/or R₂, R₃ and R₆ are alkyl, aryl, alkoxy or hydroxy, R'₄ and R₄ which may be the same, are singly-linked oxygen or a chemical bond and R₅ is doubly-linked oxygen or a chemical bond.

6. A resin composition according to any one of the preceding Claims wherein the cyanate functional monomers and/or oligomers consist essentially of one or more of the following compounds: 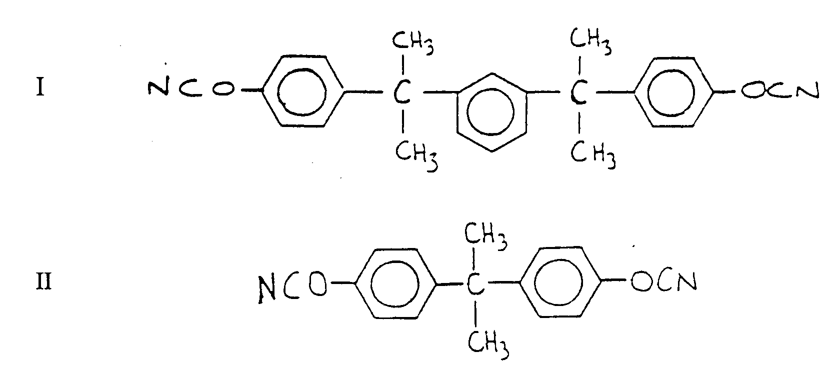 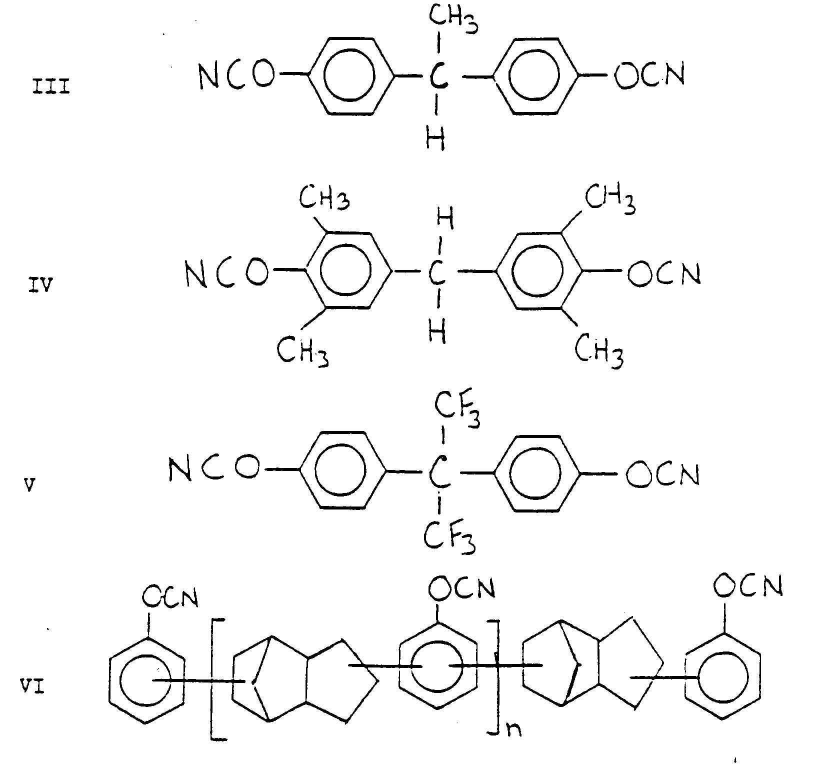 wherein n is up to 3 and can be fractional.

7. A resin composition according to any one of the preceding claims wherein the composition further comprises thermoset and/or thermoplastic components selected from the group consisting of epoxies, phenolics, arylenes, arylates, imides, esters, maleimides, methacrylates, acrylates, amides, ureas, urethanes, cyanurates, isocyanurates, ketones, sulphones, carbonates, ethers and formals.

8. A resin composition according to any one of the preceding claims containing from 0.1 to 80 weight percent of the inorganic species.

9. A resin composition according to any one of the preceding claims comprising reinforcement additives in the form of fibres selected from olefins, polytetrafluoroethylene, carbon, glass, ceramic and aramide.

10. A resin composition as claimed in claim 9 wherein the fibres are chopped, continuous or whiskers.

11. A resin composition according to any one of the preceding claims comprising a toughening agent.

12. A resin composition according to any one of the preceding claims comprising a flame retardant additive

13. A resin composition according to any one of the preceding claims wherein the composition comprises continuous fibres and is in the form of a prepreg.

14. A resin body formed from a resin composition as defined in any one of the preceding claims wherein the reactive species present in the composition have been reacted to effect curing of the resin composition.

15. A resin body as claimed in claim 15 having an outer surface area which is enriched with the inorganic species.

16. A resin body as claimed in claim 16 wherein the outer surface area comprises an enriched area which extends to a depth of about 100 Angstroms from the outer surface area.

17. Use of a resin body as claimed in any of Claims 14 to 16 as structural materials for space, aerospace, marine, automotive or electronic application.

18. Use of a resin composition as claimed in any of Claims 1 to 13 as a coating, adhesive or film.

## Patentansprüche

1. Eine härtbare Harzzusammensetzung, die eine reaktive Spezies zum Härten enthält, wobei die Zusammensetzung aus einer anorganischen Spezies und einem Cyanatharzsystem besteht, wobei die anorganische Spezies aus der Gruppe ausgewählt wird, die aus Siloxanen und Phosphazenen besteht, und eine reaktive Funktionalität besitzt, wodurch sie sich mit dem Cyanatharzsystem verbinden kann, und wobei das Cyanatharzsystem funktionelle Cyanatmonomere und/oder -oligomere umfaßt.

2. Harzzusammensetzung gemäß Anspruch 1, wobei die anorganische Spezies aus Elementen der Gruppe III, Gruppe IV, Gruppe V und der ersten Übergangsreihe von Elementen des Periodensystems besteht.

3. Harzzusammensetzung gemäß Anspruch 1 oder Anspruch 2, wobei die anorganische Spezies zumindest eines der Elemente Silicium, Zirconium, Aluminium, Titan und Phosphor umfaßt.

4. Harzzusammensetzung gemäß Anspruch 1, wobei die Siloxane und Phosphazene organische Seitengruppen umfassen.

5. Harzzusammensetzung gemäß einem der vorhergehenden Ansprüche, wobei das Cyanatharzsystem im wesentlichen aus Cyanatestern einer oder mehrerer Verbindungen der allgemeinen Formel
N C O Ar (Yₓ Arₘ)_{q} O C N
besteht, wobei m = 0 bis 5, q = 0 bis 5, und x = 0 bis zu 2, Ar eine einfache oder kondensierte aromatische Verbindung oder substituierte aromatische Verbindung und Kombinationen davon, die in ortho-, meta- und/oder para-Stellung gebunden sind, ist, und Y eine Verbindungseinheit ist, die aus der Gruppe ausgewählt wird, die aus CR₁R₂, P(R₃R₄R'₄R₅), Si(R₃R₄R'₄R₆), Sauerstoff, Carbonyl, Sulfur, Sulfuroxiden, chemischen Bindungen, Aromaten in ortho-, meta- und/oder para-Stellung besteht, wobei R₁ und R₂ Wasserstoff, halogenierte Alkane, und/oder substituierte Aromate und/oder Kohlenwasserstoffeinheiten sind, wobei die Kohlenwasserstoffeinheiten einfach oder mehrfach gebunden sind und aus bis zu 20 Kohlenstoffatomen für jedes R₁ und/oder R₂ bestehen, R₃ und R₆ Alkyl, Aryl, Alkoxy oder Hydroxy sind, R'₄ und R₄, die gleich sein können, einfach gebundener Sauerstoff oder eine chemische Bindung sind und R₅ doppelt gebundener Sauerstoff oder eine chemische Bindung ist.

6. Harzzusammensetzung gemäß einem der vorhergehenden Ansprüche, wobei die funktionellen Cyanatmonomere und/oder -oligomere im wesentlichen aus einer oder mehreren der folgenden Verbindungen bestehen: 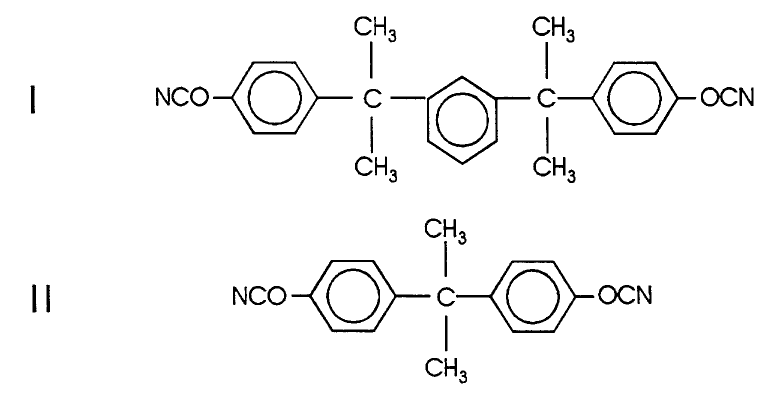 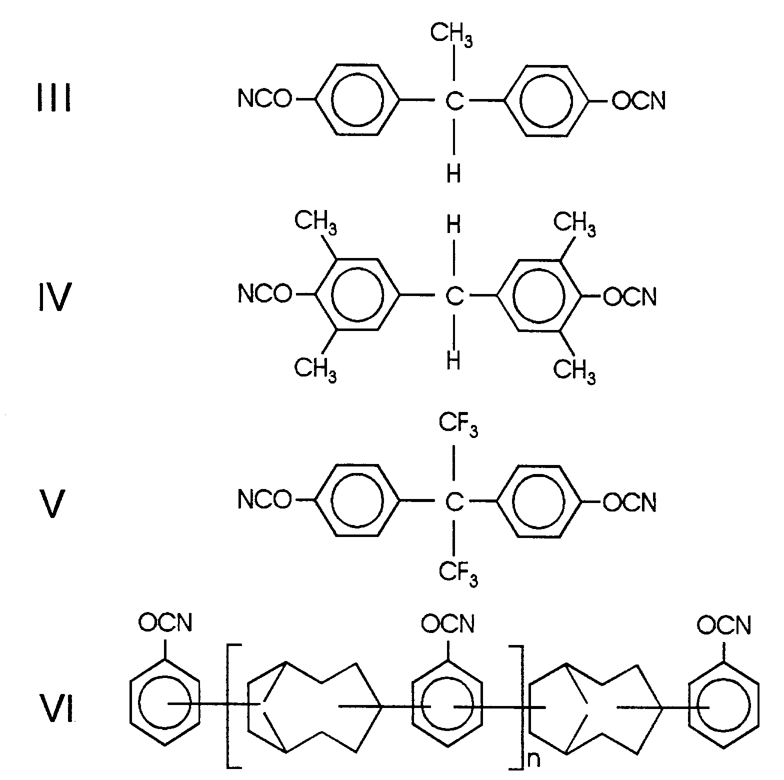 wobei n bis zu 3 ist und fraktioniert sein kann.

7. Harzzusammensetzung gemäß einem der vorhergehenden Ansprüche, wobei die Zusammensetzung weiters aus duroplastischen und/oder thermoplastischen Komponenten besteht, die aus der Gruppe ausgewählt werden, die aus Epoxidharzen, Phenolharzen, Arylenen, Arylaten, Imiden, Estern, Maleimiden, Methacrylaten, Acrylaten, Amiden, Harnstoffen, Urethanen, Cyanuraten, Isocyanuraten, Ketonen, Sulfonen, Kohlenstoffen, Ethern und Formalen besteht.

8. Harzzusammensetzung gemäß einem der vorhergehenden Ansprüche, die zwischen 0,1 und 80 Gew.-% der anorganischen Spezies enthält.

9. Harzzusammensetzung gemäß einem der vorhergehenden Ansprüche, bestehend aus Verstärkungszusätzen in Form von Fasern, die aus Olefinen, Polytetrafluorethylen, Kohlenstoff, Glas, Keramik und Aramid ausgewählt werden.

10. Harzzusammensetzung gemäß Anspruch 10, wobei die Fasern Kurzfasern, Endlosfasern oder Faserkristalle sind.

11. Harzzusammensetzung gemäß einem der vorhergehenden Ansprüche, die einen Elastifikator umfaßt.

12. Harzzusammensetzung gemäß einem der vorhergehenden Ansprüche, die einen flammenhemmenden Zusatz umfaßt.

13. Harzzusammensetzung gemäß einem der vorhergehenden Ansprüche, wobei die Zusammensetzung Endlosfasern beinhaltet und die Form eines Prepreg aufweist.

14. Ein Harzgegenstand, der aus einer Harzzusammensetzung gemäß einem der vorhergehenden Ansprüche gebildet wurde, wobei die in der Zusammensetzung reaktiven Spezies zur Reaktion gebracht wurden, um ein Härten der Harzzusammensetzung zu bewirken.

15. Harzgegenstand gemäß Anspruch 15 mit einer Außenfläche, die mit der anorganischen Spezies angereichert ist.

16. Harzgegenstand gemäß Anspruch 16, wobei die Außenfläche einen angereicherten Bereich beinhaltet, der sich von der Außenfläche in eine Tiefe von etwa 100 Ångström erstreckt.

17. Der Gebrauch eines Harzgegenstands gemäß einem der Ansprüche 14 bis 16 als Baumaterial zur Verwendung im Weltraum, Luftraum, Schiffsbau, in der Autoindustrie oder Elektronik.

18. Gebrauch einer Harzzusammensetzung gemäß einem der Ansprüche 1 bis 13 als Beschichtung, Haftmittel oder Film.

## Revendications

1. Une composition de résine durcissable contenant des espèces réactives pour effectuer le durcissement et laquelle composition comprend une espèce inorganique et un système de résine cyanate dans laquelle l'espèce inorganique est choisie parmi le groupe se composant de siloxanes et de phosphazènes et possède une fonctionnalité réactive qui la rend capable de se lier au système de résine cyanate et dans laquelle le système de résine cyanate comprend des monomères et/ou des oligomères fonctionnels de cyanate.

2. Une composition de résine selon la revendication 1 dans laquelle l'espèce inorganique comprend des éléments du Groupe III, du Groupe IV, du Groupe V et la première série de transition d'éléments du tableau périodique.

3. Une composition de résine selon la revendication 1 ou la revendication 2 dans laquelle l'espèce inorganique comprend au moins un élément d'entre le silicium, le zirconium, l'aluminium, le titane et le phosphore.

4. Une composition de résine selon la revendication 1 dans laquelle les siloxanes et les phosphazènes comprennent des groupes organiques latéraux.

5. Une composition de résine selon une quelconque des revendications précédentes dans laquelle le système de résine cyanate se compose essentiellement d'esters de cyanate d'un ou de plusieurs compounds de la formule générale
N C O Ar (Yₓ Arₘ)_{q} O C N
dans laquelle m = 0 à 5, q = 0 à 5, et x = 0 à 2 au plus, Ar est un aromatique ou un aromatique substitué simple ou fondu et des combinaisons de ceux-ci sont liées en positions ortho, méta et/ou para et Y est un motif de liaison choisi parmi le groupe se composant de CR₁R₂, de P(R₃,R₄R'₄R₅), de Si(R₃R₄R'₄R₆), d'oxygène, de carbonyle, de soufre, d'oxydes de soufre, de liaison chimique, d'aromatique lié en positions ortho, méta et/ou para, dans laquelle R₁ et R₂ sont de l'hydrogène, des alcanes halogénés, et/ou des aromatiques substitués et/ou des motifs d'hydrocarbure dans laquelle lesdits motifs d'hydrocarbure sont liés de façon simple ou multiple et se composent de 20 atomes de carbone au plus pour chaque R₁ et/ou R₂, R₃ et R₆ sont de l'alkyle, de l'aryle, de l'alkoxy ou de l'hydroxy, R'₄ et R₄, lesquels peuvent être identiques, sont de l'oxygène à liaison simple ou une liaison chimique et R₅ est de l'oxygène à liaison double ou une liaison chimique.

6. Une composition de résine selon une quelconque des revendications précédentes dans laquelle les monomères et/ou les oligomères fonctionnels de cyanate se composent essentiellement d'un ou de plusieurs des compounds suivants : 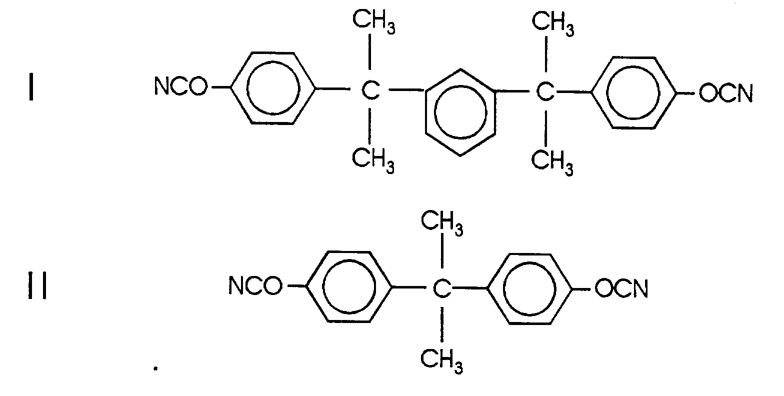 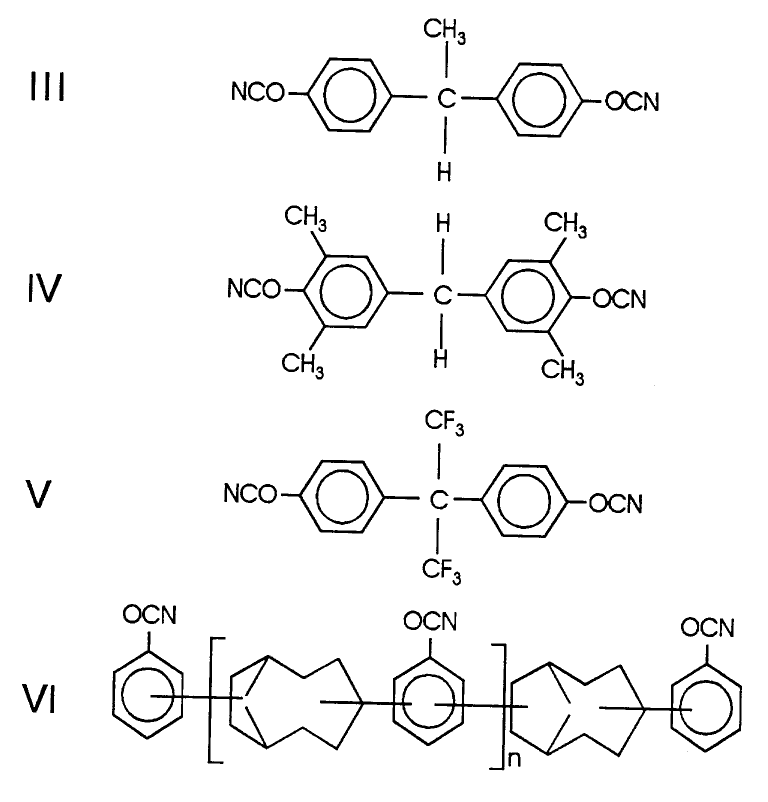 dans lequel n va jusqu'à 3 et peut être fractionné.

7. Une composition de résine selon une quelconque des revendications précédentes dans laquelle la composition comprend de plus des composants thermodurcis et/ou thermoplastiques choisis parmi le groupe se composant d'époxys, de phénoliques, d'arylènes, d'arylates, d'imides, d'esters, de maléimides, de méthacrylates, d'acrylates, d'amides, d'urées, d'uréthanes, de cyanurates, d'isocyanurates, de cétones, de sulfones, de carbonates, d'éthers et de méthylals.

8. Une composition de résine selon une quelconque des revendications précédentes contenant de 0,1 à 80 pour cent en poids de l'espèce inorganique.

9. Une composition de résine selon une quelconque des revendications précédentes comprenant des additifs de renforcement sous forme de fibres choisies parmi les oléfines, le polytétrafluoroéthylène, le carbone, le verre, la céramique et l'aramide.

10. Une composition de résine selon la revendication 10 dans laquelle les fibres sont coupées, continues ou des trichites.

11. Une composition de résine selon une quelconque des revendications précédentes comprenant un agent d'épaississage.

12. Une composition de résine selon une quelconque des revendications précédentes comprenant un additif ignifuge.

13. Une composition de résine selon une quelconque des revendications précédentes dans laquelle la composition comprend des fibres continues et se présente sous forme d'un préimprégné.

14. Un corps de résine formé à partir d'une composition de résine telle que définie dans une quelconque des revendications précédentes dans lequel les espèces réactives présentes dans la composition ont subi une réaction afin d'effectuer le durcissement de la composition de résine.

15. Un corps de résine selon la revendication 15 dont une zone de surface externe est enrichie en espèce inorganique.

16. Un corps de résine selon la revendication 16 dans lequel la zone de surface externe comprend une zone enrichie, laquelle s'étend à une profondeur d'environ 100 angströms depuis la zone de surface externe.

17. Utilisation d'un corps de résine selon n'importe lesquelles des revendications 14 à 16 en tant que matériaux de construction à l'usage spatial, aérospatial, naval, automobile ou électronique.

18. Utilisation d'une composition de résine selon n'importe lesquelles des revendications 1 à 13 en tant que revêtement, adhésif ou film.
